# EUROPÄISCHE PATENTANMELDUNG

(11) **EP 0 879 742 A1**
(43) Veröffentlichungstag der Anmeldung: **25.11.1998**
(21) Anmeldenummer: 98108434.6
(22) Anmeldetag: 08.05.1998
(51) Int. Cl.: B60R 22/46, B07B 9/00, F16C 1/14

(54) **Verfahren zum Herstellen eines Seilabschnitts mit einem Befestigungselement für ein Fahrzeuginsassen-Rückhaltesystem sowie mit diesem Verfahren hergestellter Seilabschnitt**

(30) Priorität: 20.05.1997 DE 19721076
(71) Anmelder: TRW Occupant Restraint Systems GmbH & Co. KG, 73551 Alfdorf (DE)
(72) Erfinder: Wier, Franz, 73571 Göggingen (DE)
(74) Vertreter: Kitzhofer, Thomas, Dipl.-Ing.

(57) **Zusammenfassung**

Die Erfindung betrifft ein Verfahren zum Herstellen eines Seilabschnittes (10) mit einem Befestigungselement (12; 12') für ein Fahrzeuginsassen-Rückhaltesystem, mit den folgenden Schritten:
- es wird ein Seilabschnitt (10) mit den gewünschten Eigenschaften bereitgestellt, der mit einer Kunststoff-Ummantelung (14) versehen ist,
- der Seilabschnitt (10) wird wenigstens partiell erwärmt,
- es wird auf den erwärmten Teil des Seilabschnittes (10) das Befestigungselement (12; 12') aufgepreßt.

Durch die Erfindung wird auch ein Seilabschnitt mit einem Befestigungselement für ein Fahrzeuginsassen-Rückhaltesystem geschaffen, bestehend aus einem Seilabschnitt (10), der an mindestens einem Ende mit einem Befestigungselement (12; 12') versehen ist, wobei der Seilabschnitt (10) mit einer extrudierten Kunststoff-Ummantelung (14) versehen ist.

## Beschreibung

Die Erfindung betrifft ein Verfahren zum Herstellen eines Seilabschnittes mit einem Befestigungselement für ein Fahrzeuginsassen-Rückhaltesystem. Die Erfindung betrifft auch einen Seilabschnitt mit einem Befestigungselement für ein Fahrzeuginsassen-Rückhaltesystem.

Ein solcher Seilabschnitt kann beispielsweise dazu verwendet werden, ein Sicherheitsgurtschloß mit einem fahrzeugfesten Teil zu verbinden, beispielsweise einem Rahmen eines Fahrzeugsitzes.

Der Seilabschnitt ist zu diesem Zweck an seinen beiden Enden mit einem Befestigungselement versehen, das mit dem Sicherheitsgurtschloß bzw. mit dem Fahrzeugsitzrahmen verbunden wird. Aus optischen Gründen ist der Seilabschnitt üblicherweise mit einem Schrumpfschlauch oder einem Lack überzogen. Problematisch ist, daß der Schrumpfschlauch oder der Lack an den Enden des Seilabschnittes in den Bereichen entfernt werden muß, in denen die Befestigungselemente mit dem Seilabschnitt verpreßt werden. Dieser Schritt ist sehr arbeitsaufwendig, da das Entfernen des Schrumpfschlauches oder des Lacks mit einer sehr großen Sorgfalt vorgenommen werden muß, um die benötigten Haltekräfte des Befestigungselementes an dem Seilabschnitt zu erzielen.

Durch die Erfindung ist ein Verfahren geschaffen, mit dem die Herstellung eines mit einem Befestigungselement versehenen Seilabschnittes wesentlich vereinfacht wird. Gemäß der Erfindung ist vorgesehen, daß zuerst ein Seilabschnitt mit den gewünschten Eigenschaften bereitgestellt wird, der mit einer Kunststoff-Ummantelung versehen ist. Anschließend wird der Seilabschnitt wenigstens partiell erwärmt. Schließlich wird auf den erwärmten Teil des Seilabschnittes das Befestigungselement aufgepreßt. Bei einem solchen Verfahren ist es nicht mehr notwendig, an dem Ende des Seilabschnittes, das mit einem Befestigungselement versehen werden soll, den vorhandenen Überzug zu entfernen. Statt dessen wird der Überzug erwärmt, so daß beim Aufpressen des Befestigungselementes die Kunststoff-Ummantelung unter dem Befestigungselement herausfließt; dadurch kann der notwendige Formschluß mit dem Befestigungsabschnitt erzielt werden. Je nach den speziellen Eigenschaften des für die Ummantelung des Seilabschnittes verwendeten Kunststoffs kann es notwendig sein, diesen bis in den Bereich seiner Erweichungstemperatur zu erwärmen, damit das notwendige Fließen des Kunststoffs während des Verpressens auftritt, oder es kann auch ausreichend sein, lediglich eine geringfügige Erwärmung vorzunehmen, so daß die Fließfähigkeit des Kunststoffes erst aufgrund des beim Aufpressen wirkenden Drucks zwischen dem Ende des Seilabschnittes und dem Befestigungselement erreicht wird.

Gemäß einer bevorzugten Ausführungsform der Erfindung ist vorgesehen, daß der Seilabschnitt ausgehend von einem Seil durch Ablängen bereitgestellt wird und daß die Kunststoff-Ummantelung vor dem Ablängen auf das Seil aufgebracht wird. Bei diesem Verfahren erfolgt das Aufbringen der Kunststoff-Ummantelung als ein im wesentlichen kontinuierlicher Schritt, was hinsichtlich des Herstellungsaufwandes günstig ist. Alternativ kann auch vorgesehen sein, daß der Seilabschnitt ausgehend von einem Seil durch Ablängen bereitgestellt wird und daß die Kunststoff-Ummantelung auf den Seilabschnitt aufgebracht wird.

Die Kunststoff-Ummantelung kann ein aufgeschobener Schrumpfschlauch sein, der erwärmt wird, so daß er auf dem Seilabschnitt bzw. dem Seil aufschrumpft. Alternativ kann vorgesehen sein, daß die Kunststoff-Ummantelung eine Kunststoffhülse ist, die auf den Seilabschnitt bzw. das Seil aufgeschoben wird. Gemäß der bevorzugten Ausführungsform der Erfindung ist jedoch vorgesehen, daß die Kunststoff-Ummantelung aufextrudiert wird. Die Verwendung einer extrudierten Kunststoff-Ummantelung hat abgesehen von den Vorteilen beim Aufpressen des Befestigungselementes weitere Vorteile, insbesondere dann, wenn der Seilabschnitt in Verbindung mit einer Straffvorrichtung verwendet wird, beispielsweise einem Schloßstraffer. Eine aufextrudierte Kunststoff-Ummantelung kann mit einer bezüglich der Dicke sehr hohen Maßgenauigkeit im Bereich von ± 0,05 mm gefertigt werden. Aufgrund dieser Maßgenauigkeit läßt sich eine sehr gute Abdichtung am Durchtritt des Seilabschnittes durch eine Öffnung erzielen, beispielsweise beim Austritt aus einem Schloßstraffer. Hierbei besteht ein weiterer Vorteil darin, daß beim Aufextrudieren der Kunststoff-Ummantelung die Hohlräume zwischen den einzelnen Kardeelen des Seils ausgefüllt werden. Ein weiterer Vorteil besteht darin, daß für die Ummantelung ein Kunststoff mit einer hohen Temperaturbeständigkeit verwendet werden kann. Aufgrund der Temperaturbeständigkeit kann die Kunststoff-Ummantelung eine Schutzfunktion für das Seil haben, so daß eine thermische Schädigung des Seils nach dem Zünden der Straffvorrichtung verhindert wird.

Durch die Erfindung ist auch ein Seilabschnitt mit einem Befestigungselement für ein Fahrzeuginsassen-Rückhaltesystem geschaffen, bestehend aus einem Seilabschnitt, der an mindestens einem Ende mit einem Befestigungselement versehen ist, wobei der Seilabschnitt mit einer Kunststoff-Ummantelung versehen ist. Bezüglich der Vorteile eines erfindungsgemäßen Seilabschnittes gegenüber einem herkömmlichen Seilabschnitt wird auf die obigen Erläuterungen verwiesen.

Weitere Merkmale der Erfindung ergeben sich aus den Unteransprüchen.

Die Erfindung wird nachfolgend unter Bezug auf die beigefügten Zeichnungen beschrieben. In diesen zeigen:
- Figur 1 in einer schematischen Perspektivansicht einen erfindungsgemäßen Seilabschnitt mit einem Befestigungselement;
- Figur 2 in einer schematischen Draufsicht einen erfindungsgemäßen Seilabschnitt mit einem anderen Befestigungselement;
- Figur 3 schematisch einen ersten Schritt eines erfindungsgemäßen Verfahrens, bei dem ein Seil bereitgestellt wird;
- Figur 4 schematisch einen zweiten Schritt eines erfindungsgemäßen Verfahrens, bei dem auf das Seil eine Kunststoff-Ummantelung aufextrudiert wird;
- Figur 5 schematisch einen dritten Schritt eines erfindungsgemäßen Verfahrens, bei dem das Seil in Seilabschnitte gewünschter Länge unterteilt wird;
- Figur 6 schematisch einen vierten Schritt eines erfindungsgemäßen Verfahrens, bei dem der Seilabschnitt an den Enden erwärmt wird;
- Figur 7 schematisch einen fünften Schritt eines erfindungsgemäßen Verfahrens, bei dem auf das erwärmte Ende des Seilabschnittes ein Befestigungselement aufgepreßt wird;
- Figur 8 schematisch einen Zwischenschritt bei einer Alternative eines erfindungsgemäßen Verfahrens; und
- Figur 9 schematisch einen Zwischenschritt bei einer weiteren Alternative eines erfindungsgemäßen Verfahrens.

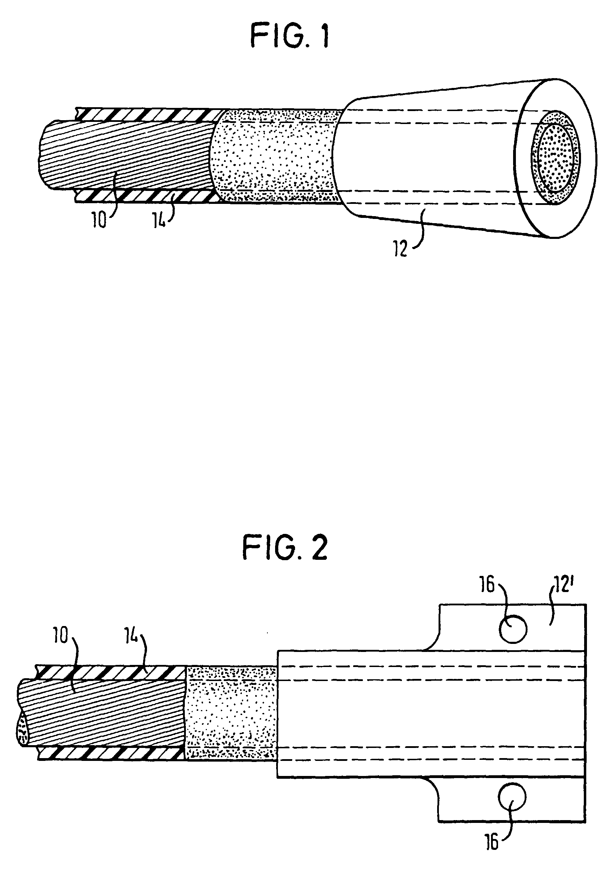

In Figur 1 ist schematisch ein erfindungsgemäßer Seilabschnitt 10 mit einem Befestigungsabschnitt 12 für ein Fahrzeuginsassen-Rückhaltesystem dargestellt. Das Befestigungselement 12 ist ein kegelstumpfförmiges Preßteil, auf das beispielsweise ein Kolben für einen Linearantrieb eines Schloßstraffers oder eines Gurtstraffers aufgesetzt werden kann, der auf einen Sicherheitsgurtaufroller einwirkt. Der Seilabschnitt 10 ist mit einer Kunststoff-Ummantelung 14 versehen, die aufextrudiert wurde.

In Figur 2 ist schematisch ein erfindungsgemäßer Seilabschnitt 10 mit einem anderen Befestigungselement 12' versehen. Das Befestigungselement 12' hat eine zylindrische Grundform mit zwei seitlichen Befestigungslaschen, in denen Befestigungslöcher 16 gebildet sind. Das Befestigungselement 12' kann beispielsweise dazu verwendet werden, den Seilabschnitt an einem fahrzeugfesten Teil festzuschrauben.

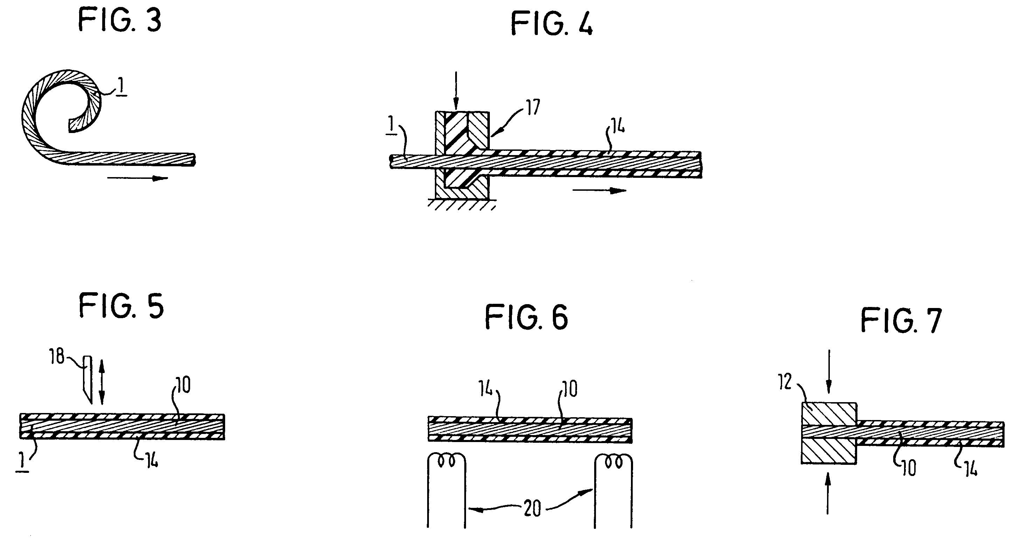

In den Figuren 3 bis 7 sind schematisch verschiedene Schritte der Herstellung eines erfindungsgemäßen Seilabschnittes mit einem Befestigungselement dargestellt. Zuerst wird ein Seil 1 bereitgestellt, das die gewünschten Eigenschaften hat (Figur 3). Zu diesen Eigenschaften gehört insbesondere die Festigkeit des Seils sowie die gewünschte Elastizität, etc.

Anschließend wird auf das Seil 1 eine Kunststoff-Ummantelung 14 aufextrudiert (Figur 4). Dies geschieht mittels einer schematisch dargestellten Vorrichtung 17, die nicht Gegenstand der vorliegenden Anmeldung ist und daher nicht näher beschrieben wird.

Nach dem Aufextrudieren der Kunststoff-Ummantelung 14 wird das Seil 1 in Seilabschnitte 10 mit gewünschter Länge unterteilt (Figur 5). Dazu kann eine beliebige Schneidevorrichtung verwendet werden, die schematisch mit dem Bezugszeichen 18 versehen dargestellt ist.

Im nächsten Schritt wird mindestens das Ende des Seilabschnittes 10 erwärmt, auf das das Befestigungselement aufgepreßt werden soll (Figur 6). Für die Erwärmung der entsprechenden Enden des Seilabschnittes 10 kann eine Induktionsheizvorrichtung oder eine Wärmequelle verwendet werden, wie dies in Figur 6 unter dem Bezugszeichen 20 dargestellt ist. Die Wärmequelle 20 erwärmt das entsprechende Ende des Seilabschnittes 10 sowie die an diesem Ende vorhandene Kunststoff-Ummantelung 14.

Anschließend wird auf das Ende des Seilabschnittes 10 das Befestigungselement 12 aufgepreßt (Figur 7). Aufgrund der vorherigen Erwärmung der Kunststoff-Ummantelung 14 fließt diese beim Aufpressen des Befestigungselementes 12 unter diesem heraus, so daß der notwendige Formschluß zwischen dem Befestigungselement 12 und dem Seilabschnitt 10 erhalten wird.

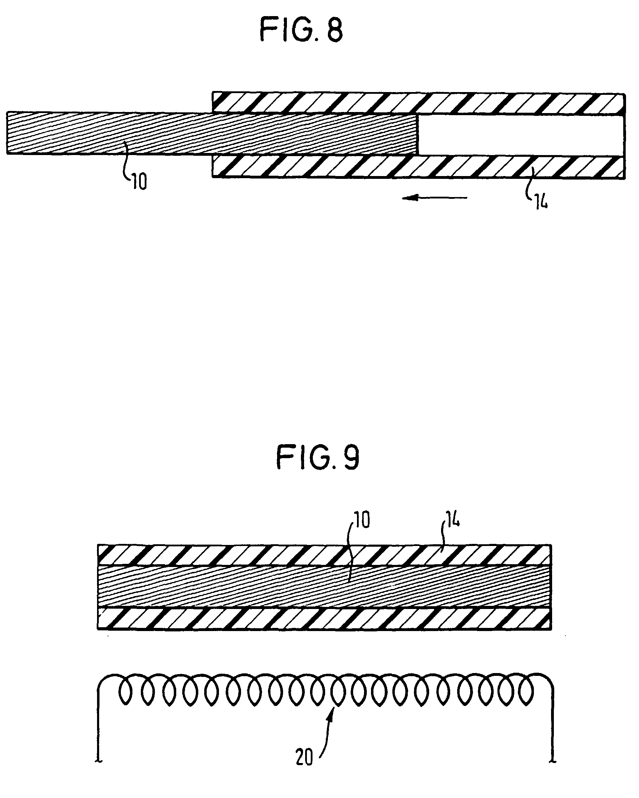

In Figur 8 ist schematisch ein Zwischenschritt bei einem alternativen Verfahren dargestellt. Dieses Verfahren besteht darin, auf einen durch Ablängen bereitgestellten Seilabschnitt 10 eine Kunststoff-Ummantelung aufzuschieben, die als Kunststoffhülse 14 ausgebildet ist. Diese Kunststoffhülse dient den gleichen Zwecken wie die aufextrudierte Kunststoff-Ummantelung 14 bei dem in den Figuren 3 bis 7 dargestellten Verfahren, also sowohl zum mechanischen Schutz des Seilabschnittes 10 vor Beschädigungen als auch zum thermischen Schutz, falls der Seilabschnitt in Verbindung mit einer pyrotechnischen Antriebsvorrichtung verwendet wird. Ferner dient die Kunststoff-Ummantelung optischen Zwecken. Nachdem die Kunststoffhülse 14 auf den Seilabschnitt 10 aufgeschoben ist, wird das Befestigungselement in gleicher Weise wie unter Bezugnahme auf die Figuren 6 und 7 beschrieben aufgepreßt.

In Figur 9 ist eine weitere Alternative eines erfindungsgemäßen Verfahrens dargestellt. In diesem Fall wurde auf den Seilabschnitt 10 ein Schrumpfschlauch 14 aufgeschoben, der die Kunststoff-Ummantelung bildet. Dieser Schrumpfschlauch 14 wird mittels der Wärmequelle 20 erwärmt, so daß er auf dem Seilabschnitt 10 aufschrumpft. Anschließend kann das Befestigungselement in gleicher Weise wie unter Bezugnahme auf die Figuren 6 und 7 beschrieben am Seilabschnitt 10 angebracht werden.

## Patentansprüche

1. Verfahren zum Herstellen eines Seilabschnittes (10) mit einem Befestigungselement (12; 12') für ein Fahrzeuginsassen-Rückhaltesystem, mit den folgenden Schritten:
- es wird ein Seilabschnitt (10) mit den gewünschten Eigenschaften bereitgestellt, der mit einer Kunststoff-Ummantelung (14) versehen ist,
- der Seilabschnitt (10) wird wenigstens partiell erwärmt,
- es wird auf den erwärmten Teil des Seilabschnittes (10) das Befestigungselement (12; 12') aufgepreßt.

2. Verfahren nach Anspruch 1, dadurch gekennzeichnet, daß nur das mit dem Befestigungselement (12; 12') zu versehende Ende des Seilabschnittes (10) erwärmt wird.

3. Verfahren nach Anspruch 2, dadurch gekennzeichnet, daß das mit dem Befestigungselement (12; 12') zu versehende Ende des Seilabschnittes (10) induktiv erwärmt wird.

4. Verfahren nach einem der Ansprüche 1 und 2, dadurch gekennzeichnet, daß das mit dem Befestigungselement (12; 12') zu versehende Ende des Seilabschnittes (10) einer Wärmequelle (20) ausgesetzt wird.

5. Verfahren nach einem der vorhergehenden Ansprüche, dadurch gekennzeichnet, der Seilabschnitt (10) ausgehend von einem Seil (1) durch Ablängen bereitgestellt wird und daß die Kunststoff-Ummantelung (14) auf den Seilabschnitt (10) aufgebracht wird.

6. Verfahren nach einem der Ansprüche 1 bis 4, dadurch gekennzeichnet, daß der Seilabschnitt (10) ausgehend vom einem Seil (1) durch Ablängen bereitgestellt wird und daß die Kunststoff-Ummantelung (14) vor dem Ablängen auf das Seil (1) aufgebracht wird.

7. Verfahren nach einem der vorhergehenden Ansprüche, dadurch gekennzeichnet, daß die Kunststoff-Ummantelung (14) aufextrudiert wird.

8. Verfahren nach einem der Ansprüche 1 bis 6, dadurch gekennzeichnet, daß die Kunststoff-Ummantelung ein aufgeschobener Schrumpfschlauch (14) ist, der erwärmt wird, so daß er auf dem Seilabschnitt (10) bzw. dem Seil (1) aufschrumpft.

9. Verfahren nach einem der Ansprüche 1 bis 6, dadurch gekennzeichnet, daß die Kunststoff-Ummantelung eine Kunststoffhülse (14) ist, die auf den Seilabschnitt (10) bzw. das Seil (1) aufgeschoben wird.

10. Verfahren nach einem der vorhergehenden Ansprüche, dadurch gekennzeichnet, daß die Kunststoff-Ummantelung (14) eine sehr hohe Maßgenauigkeit bezüglich ihrer Dicke hat.

11. Verfahren nach Anspruch 10, dadurch gekennzeichnet, daß die Kunststoff-Ummantelung (14) eine Maßgenauigkeit ihrer Dicke von ± 0,05 mm hat.

12. Verfahren nach einem der vorhergehenden Ansprüche, dadurch gekennzeichnet, daß die Kunststoff-Ummantelung (14) eine hohe Temperaturbeständigkeit hat.

13. Seilabschnitt mit einem Befestigungselement für ein Fahrzeuginsassen-Rückhaltesystem, bestehend aus einem Seilabschnitt (10), der an mindestens einem Ende mit einem Befestigungselement (12; 12') versehen ist, wobei der Seilabschnitt (10) mit einer Kunststoff-Ummantelung (14) versehen ist.

14. Seilabschnitt nach Anspruch 13, dadurch gekennzeichnet, daß die Kunststoff-Ummantelung ein Schrumpfschlauch (14) ist.

15. Seilabschnitt nach Anspruch 13, dadurch gekennzeichnet, daß die Kunststoff-Ummantelung ein Extruderteil (14) ist.

16. Seilabschnitt nach Anspruch 13, dadurch gekennzeichnet, daß die Kunststoff-Ummantelung eine Kunststoffhülse (14) ist.

17. Seilabschnitt nach einem der Ansprüche 13 bis 16, gekennzeichnet durch seine Verwendung zum Anschluß eines Gurtschlosses an einen Gurtstraffer, der eine Durchtrittsöffnung für den Seilabschnitt aufweist, an der die Kunststoff-Ummantelung abdichtet.
